(19) Europäisches Patentamt
European Patent Office
Office européen des brevets

(11) **EP 4 300 149 A1**

(12) **EUROPEAN PATENT APPLICATION**

(43) Date of publication:
**03.01.2024 Bulletin 2024/01**

(21) Application number: **22182366.9**

(22) Date of filing: **30.06.2022**

(51) International Patent Classification (IPC):
**G02B 6/26** *(2006.01)*     *G02B 1/111* *(2015.01)*
**G02B 6/04** *(2006.01)*     *G02B 6/10* *(2006.01)*
**G02B 6/30** *(2006.01)*     *G01N 21/77* *(2006.01)*

(52) Cooperative Patent Classification (CPC):
G02B 6/241; **G02B 6/262;** G02B 1/002; G02B 6/04;
G02B 6/107; G02B 6/30

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2022 PT 2022118074**

(71) Applicants:
• **INESC TEC - Instituto de Engenharia de Sistemas
e
Computadores, Tecnologia e Ciência
4200-465 Porto (PT)**
• **Universidade Do Porto
4099-002 Porto (PT)**

(72) Inventors:
• **Negrão da Silva Guerreiro, Ariel Ricardo
4150-179 Porto (PT)**

• **Esteves de Araújo, João Pedro
4150-179 Porto (PT)**
• **Oliveira Teixeira Leite, Ivo Jorge
69231 Rauenberg (DE)**
• **Tavares de Sousa, Célia
4150-179 Porto (PT)**
• **da Silva Ferreira, Tiago David
4200-465 Porto (PT)**
• **Azevedo Silva, Nuno Miguel
4200-465 Porto (PT)**
• **Costa Coelho, Luís Carlos
4200-465 Porto (PT)**
• **Alves da Silva Apolinário, Arlete Ondina
4150-179 Porto (PT)**
• **da Rocha Rodrigues, Pedro Miguel
4150-179 Porto (PT)**

(74) Representative: **Patentree
Edificio Net
Rua de Salazares, 842
4149-002 Porto (PT)**

(54) **MULTILAYER OPTICAL INTERFACE AND METHOD THEREOF**

(57) The present document discloses a multilayer optical interface comprising: a first optical component for receiving a light signal; a second optical component for propagating the light signal; a plurality of adhesive layers binding an end of the first optical component to an end of the second optical component, for matching the optical impedance; wherein the first optical component comprises a refractive index different than a second optical component refractive index, wherein the plurality of adhesive layers comprises a sequential gradient of refraction indices. It is also disclosed a method of fabrication of said multilayer optical interface.

Fig. 3

**Description**

**TECHNICAL FIELD**

The present disclosure relates to a multilayer optical interface and method.

**BACKGROUND**

An optical sensor uses the properties of light, the interaction of an optical signal with some analyte, e.g., chemical substance, film, environmental condition, etc., and the measurement of alterations to the original properties of light, e.g., phase, spectral content, amplitude of the optical wave, imprinted by that interaction to obtain information about characteristics of the analyte.

Optical sensors may include several components, among which two are of special importance, the telemetry channel, and the sensing structure.

The telemetry channel, which concerns the structure that guides the light from a source to an interaction position, where the interaction with the analyte takes place, and from there to a detector or a measurement apparatus, where the readout of the altered properties of light takes place. Examples of telemetry channels include optical fibres and other optical waveguides, integrated optics structures, among others.

The sensing structure, which promotes the interaction between the optical signal and the analyte. Examples of sensing structures include Bragg gratings, interferometers, thin films, among others.

Optical sensors may include other components and subcomponents besides a telemetry channel and sensing structure. For example, some authors include the optical source and the detector or measurement apparatus as components of the sensor.

A challenge in the design and implementation of optical sensors concerns promoting propagation of the optical signal between the different components of the sensor without unintended losses or alteration of its properties, including losses by reflection or transmission at the boundaries and the interface between two components.

It is also very difficult to obtain a strong mechanical binding in mounting the films on polished surfaces of the fibre, but also in terms of allowing the optical signal to be propagated from the optical fibre to the film and back. These problems arouse, for example, when developing optical sensors combining optical fibres as the telemetry channel and metamaterial films as sensing structure.

This is of particular importance, since some of the components and interconnections between components occur at a scale of a few millimetres to a few micrometres, where positioning of the components is more difficult than components with sizes of several centimetres or larger. An added difficulty in these optical sensors is that components such as thin films of an optical metamaterial are very mechanically fragile, in view of their intricate nanostructure.

The author Leite et. al [1] discloses the use of one layer of adhesive to bind a nanostructures metamaterial thin film to the tip of an optical fibre, however this is only efficient if the two components have a similar value of refractive index, thus allowing to use an adhesive with an intermediate value of refractive index to attain optical impedance matching between the two components. Here, a single adhesive layer with intermediate refractive index does not provide optimum refractive index matching capable of producing optical impedance matching.

There are several methods for linking a film, acting as a sensing structure, to a telemetry channel in optical sensors, however they have some serious drawbacks, especially when considering nanostructured materials.

Common methods of deposition of thin films - ranging from physical vapor deposition techniques to chemical vapor deposition methods or atomic layer deposition, sputtering and spin coating, among others, are only adequate for fabricating films of uniform material, not micro and nanostructured materials, such as metamaterials, photonic crystals, diffractive structures and gratings.

The direct fusion of the film onto the telemetry channel, typically destroys or alters the intended properties of the film.

The fabrication of the film on the surface of the fibre, e.g., by sputtering, typically only allows the production of thin films of uniform materials and not the nanostructured materials that typically constitute an optical metamaterial film. These are composed of components/structures smaller than the film thickness distributions in an ordered or random fashion. The nanostructures usually have a specific geometry, such as nanowires, quantum dots, etc. Leading to a more complex fabrication process than a simple deposition and may include more complex methods.

It is also known the use of adhesives for optoelectronic applications such as bonding and fixing of optical fibres which require optimum refractive index matching, in addition to good adhesion and workability, for large optical components. Nevertheless, these optical adhesives are designed to bind and transmit optical signals between components with similar refractive index and that are optically robust, such as lenses, optical fibres, not thin films and/or optical metamaterials, for example.

These difficulties are present in other optical technologies, such as those found in developing integrated optics and integrated optical circuits, where the sizes of optical components are also very small, and they must be combined in the same optical platform.

These facts are disclosed in order to illustrate the technical problem addressed by the present disclosure.

**GENERAL DESCRIPTION**

The present document discloses a multilayer optical interface comprising:

a first optical component for receiving a light signal;
a second optical component for propagating the light signal;
a plurality of adhesive layers binding an end of the first optical component to an end of the second optical component, for matching the optical impedance;
wherein the first optical component comprises a refractive index different, or distinct, from a second optical component refractive index,
wherein the plurality of adhesive layers comprises a sequential gradient of refraction indices.

In an embodiment, the first optical component is selected from the list: optical fibre, optical waveguide, optical circuit, and integrated optics device.

In an embodiment, the second optical component is selected from the list: film, foil and membrane, preferably a film, more preferably a thin film.

A film, foil, membrane, element as long as it has dimensions greater than a few microns and its structural components are smaller than 100nm in size can be considered to have a refractive index. It just has to have dimensions much larger (20x) than the longest wavelength that makes up the signal.

In an embodiment, the film comprises nanoparticles, nanostructures, chemical or biological markers; preferably the nanoparticles are selected from nanotubes, nanowires, nanodots, and quantum dots, and preferably the nanostructures are selected from metamaterials, photonic crystals and nanostructured membranes, and preferably the markers are selected from antibodies and immobilized peptide nucleic acid probes.

In an embodiment, the number of the adhesive layers is from 2 to 100, preferably 2 to 20, and the adhesive layers are made of acrylic-based, silicone-based, epoxy-based, polyurethane-based liquids, or combination thereof; preferably fluorinated epoxy and fluorinated epoxy acrylate resins.

In an embodiment, thickness of each adhesive layer of the plurality of adhesive layer is from $1 \times 10^{-4}$ m to $1 \times 10^{-6}$ m.

In an embodiment, the refraction index of each adhesive layer of the plurality of adhesive layers is within the range of the first optical component refraction index and the second optical component refractive index.

In an embodiment, the multilayer optical interface further comprising a coating agent surrounding the plurality of adhesive layers; preferably the coating agent is selected from liquid optical adhesive, silvering coatings, e.g. silver, aluminium, gold, and various metals, dielectric coatings, e.g. magnesium fluoride, calcium fluoride, and various metal oxides, constituting high-reflection optical coatings.

In an embodiment, the coating agent has a refraction index at least 20% higher than the plurality of adhesive layers refraction indices.

It is further disclosed a method of fabrication of a multilayer optical interface comprising the steps of:

applying a pre-determined number of adhesive layers at an end of a first optical component;
placing an end of the second optical component over the adhesive layers;
curating the adhesive layers, using ultraviolet light, heat, moisture, or a combination of the previous.

In an embodiment, a method further comprising the steps of:

joining a plurality of fibres to form a bundle;
dipping the bundle in a soluble binding agent for binding the plurality of fibres;
curating the soluble binding agent;
cleaving the bundle such that the plurality of fibres has a flat surface end;
polishing the flat surface end;
removing the soluble binding agent;
wherein the bundle is fully, or partly, dipped in the soluble binding agent;
wherein the soluble binding agent is in the liquid form;
wherein the soluble bind agent binds each of the fibres from the plurality of fibres by capillarity or negative pressure.

In an embodiment, said method further comprising the steps:

depositing a thin aluminium layer over the flat surface end;
transforming the thin aluminium layer to obtain a nanostructure thin layer;
separating each fibre from the bundle.

In an embodiment, the polishing of the flat surface end is by chemical processes, physical processes or combination thereof.

In an embodiment, the transformation of the thin aluminium layer is by chemical processes, physical processes or combination thereof.

In an embodiment, the soluble binding agent is removed using a solvent.

In an embodiment, the optical component comprises a fibre with a length of 0,1 -1m.

In an embodiment, the plurality of fibres are joined using a strap or belt.

In an embodiment, the soluble binding agent is removed using a solvent.

In an embodiment, a thin film of aluminium is deposited on the fibre, preferably on a cleaved surface of the fibre, and then fabricate the film directly on the fibre.

## BRIEF DESCRIPTION OF THE DRAWINGS

The following figures provide preferred embodiments for illustrating the disclosure and should not be seen as limiting the scope of invention.

**Figure 1:** Schematic representation of two embodiments of a mounting of two optical components using a plurality of adhesive layers.

**Figure 2:** Schematic representation of a bundle of optical fibres with a soluble binding agent.

**Figure 3:** Schematic representation of an embodiment of a multilayer optical interface without a coating agent (Fig. 3A) and with a coating agent (Fig. 3B).

**Figure 4:** Schematic diagram of an embodiment of the method of fabrication of a multilayer optical interface.

## DETAILED DESCRIPTION

The fabrication method of a multilayer optical interface comprises the steps of:

- Promoting the binding between two optical components using an optical adhesive material; and
- Fabricating the film directly on the polished surface of the fibre.

The optical adhesive material is typically a liquid-based bonding technology used in display devices, touch panels, optical fibres, etc. to bind a cover lens, plastic, or other optical materials to the main sensor unit or each other. These adhesives are often hardened using ultraviolet light, heat, moisture, or a combination of the previous, in a single or double cure.

The chemistry of the adhesive is very diverse, including acrylic-based, silicone-based, epoxy-based, and polyurethane-based liquids. Many of the optical adhesives are provided by manufacturers [2], such as a liquid optical adhesive based on fluorinated epoxy and fluorinated epoxy acrylate resins.

The thickness of a layer of adhesive is preferably less than a tenth of a millimeter to several microns.

In an embodiment, to further improve the optical properties of the bond, the bonding surfaces of the components are pre-processed via polishing, chemical and physical modification of the surface, or a combination of the previous.

In an embodiment, the method for binding two optical components, using an adhesive material, comprises the steps of:

- as a facultative step, the binding can be performed in a chamber or closed space where the environmental pressure can be controlled and modified;
- the environmental pressure a chamber or closed space may be decreased to diminish the local atmospheric density;
- an amount of adhesive is applied in the larger and mechanically more robust component, such as the intended surface of the optical fibre;
- if the binding of the two components is being done in a reduced environmental pressure, it can now be increased. Existing gas trapped between the surface of the component and the adhesive or inside the adhesive with decrease in volume, proportional to the pressure variation, thus minimizing the size of optical imperfections and decreasing losses via optical scattering thereof;

- the cure processes are applied to permanently hardening the adhesive;
- the previous steps are then repeated to build up a stack of several adhesives with adequate refractive indexes;
- in the last steps, after reducing the environmental pressure and applying an amount of adhesive the second component, such as a film, is placed on the adhesive facing of the surface of the first component;
- some pressure may be applied between the two components to promote binding and correct their relative position;
- again, if the binding of the two components is being done in a reduced environmental pressure, it can now be increased. Existing gas trapped between the surface of the component and the adhesive or inside the adhesive with decrease in volume, proportional to the pressure variation, thus minimizing the size of optical imperfections and decreasing loses via optical scattering thereof.
- the cure processes are then applied, permanently hardening the adhesive and binding the two components.
- the pressure inside the chamber or closed space is then returned to normal.

These thin films are very fragile and brickly, having little elasticity hence easily cracked or fractured or snapped. If not reinforced, after fabrication the transport and manipulation of the films or devices may cause them to break or be permanently damaged.

It is disclosed a multilayer optical interface, furnishing a smooth transition between two optical components with different indices of refraction, namely an optical fibre and a film, since the use of adhesive or bonding agents acts as an optical barrier between the two components, and also a film and a fibre typically have very distinct refractive index.

Here, the number, thickness and refractive index of each layer is adjusted taking into consideration the difference in refractive index of the two optical components being bonded, the refractive index of binding agents available, according to the expression (1).

For a stratified optical medium composed of N thin slate with thickness $D_s$ and constant value of refractive index $n_s$ stacked on top of each other, where s is an index identifying the relative position of each slate in the stratified medium, the amplitude of the electric field associated with a plane wave as it exits the last slate is approximated under the WKB approximation by,

$$E_N = E_0 \exp\left( -\sum_{s=0}^{n-1} \ln\left(1 + \Delta n_s/2n_s\right) - j\sum_{s=0}^{n} k_0 n_s D_s \right) \tag{1}$$

where $E_0$ and $k_0$ are respectively the amplitude and wavenumber of the electric field as it enters the first slate, $\Delta n_s = n_{s+1} - n_s$, and $j$ is the imaginary unit [4].

In an embodiment, the binding of the surfaces is performed under reduced pressure environment, below 1 atm, to reduce the formation of air gaps between the binding surfaces.

If there were gaps or imperfections between the adhesive or bonding agent and the surface of the fibre or film, further power can be lost, for example due to optical scattering or diffusion. So, it is used liquid optical adhesives with low surface tension and viscosity to facilitating the uniformly spreading over the binding surfaces, covering existing imperfections, thus reducing the occurrence and scale of gaps or imperfections.

The cover, or coating, of the bond allows to minimize the loss of optical power of the signal at the interface between the surface of the fibre and the adhesive or bonding agent, the edges of the adhesive or bonding agent, and the adhesive or bonding agent and the film being mounted.

In an embodiment the optical adhesive is liquid in order to spread uniformly over the binding surfaces, thus covering existing imperfections.

Adhesives with low surface tension and viscosity are more effective in spreading over the surface and covering existing imperfections.

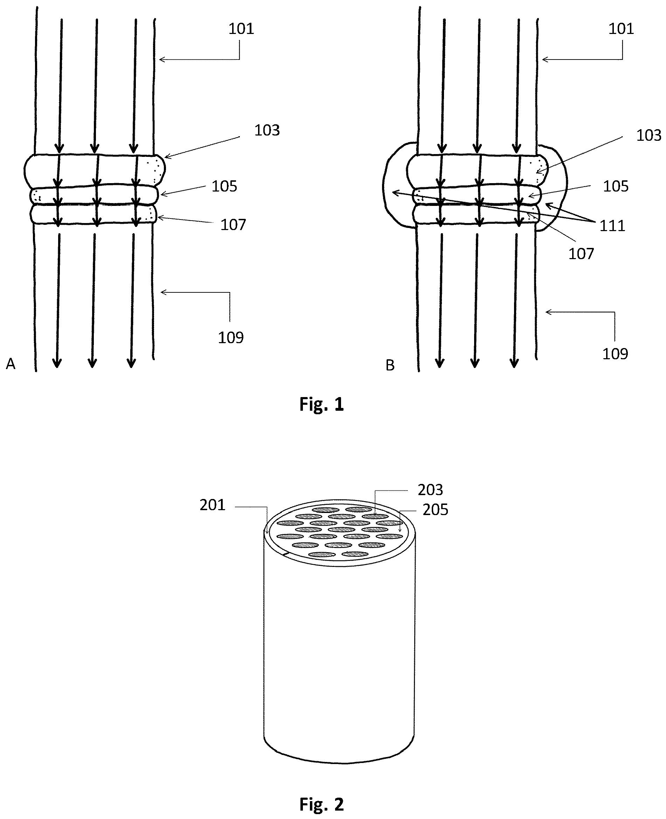

In **Figure 1** it is shown a schematic representation of two embodiments of a mounting of two optical components using a plurality of adhesive layers, on the left (A), an embodiment with several layers of adhesives stacked, and on the right (B), an embodiment with a coating material. Here 101 represents a first optical component, 103 represents a first adhesive layer, 105 represents a second adhesive layer, 107 represents a third adhesive layer, 109 represents a second optical component, and 111 represents a coating agent surrounding the adhesive layers.

In an embodiment, for a similar refractive index of a fibre and a film, the adhesive material is chosen to have a refractive index value in between those values to produce a smooth transition of refractive index that minimises light losses by reflection at the interface.

The present document discloses a multilayer optical interface comprising multiple stacked layers of adhesives to bind two optical components, namely a fibre to a film. The refractive index of each adhesive layer is such that differences between the refractive indices of any two adjacent layers in the stack is smaller than the difference in refractive index of the fibre and the film.

In an embodiment, the adhesive bond, between the fibre and a thin film, is covered, or coated, with a contrast material with refractive index much higher than the layers of adhesive to improve optical guiding and mechanically reinforcing the bond between the thin film and a fibre. Wherein the contrast material is a liquid optical adhesive.

The advantages of this multilayer optical interface include allowing for separate fabrication of the components, thus reducing complexity of the fabrication processes and production cost; different schemes of layered adhesives, e.g., with different thicknesses and refraction indices, improves the optical impedance matching; the adhesive adds mechanical and structural robustness to the film; optical guiding through the adhesive layer reduces impact of optical misalignment and surface imperfections between the fibre and the film.

In **Figure 2** it is shown a schematic representation of a bundle of optical fibres with a soluble binding agent, wherein 201 represents a belt or a strap, 203 represents an optical fibre, and 205 represents a soluble binding agent.

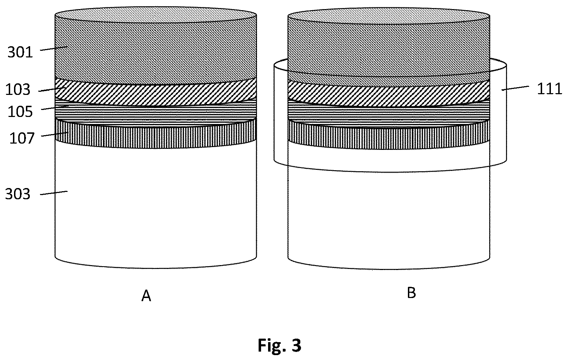

In **Figure 3** it is shown a schematic representation of an embodiment of a multilayer optical interface without a coating agent (Fig. 3A) and with a coating agent (Fig. 3B), wherein 301 represents a film, 303 represents an optical fibre, 103 represents a first adhesive layer, 105 represents a second adhesive layer, 107 represents a third adhesive layer, and 111 represents a coating agent surrounding the adhesive layers.

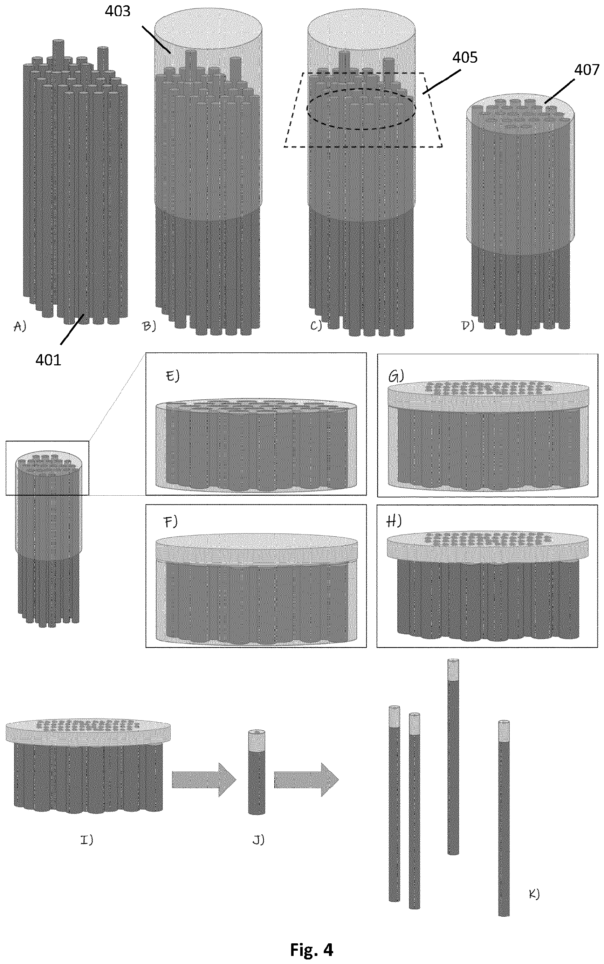

In **Figure 4** it is shown a schematic diagram of an embodiment of the method of fabrication of a multilayer optical interface, wherein 401 represents a plurality of fibres, 403 represents a soluble binding agent, 405 represents a plane of cleaving for obtaining a flat surface, and 407 represents a flat surface end.

In an embodiment, Fig. 4A represents a plurality of optical fibres are bundled together; Fig. 4B shows a plurality of fibres bounded by a soluble binding agent and, as the later hardens, become anchored, forming a single solid; Fig. 4C represents the bundle that is then cleaved at a plane to form a common plane surface; Fig. 4D shows that the bundles can then be polished and processed to improve surface quality.

It is also disclosed a respective method of fabrication of said multilayer optical interface and film directly on several fibres simultaneously, comprising the steps:

- Joining several fibres in a bundle, such as a bundle of straw where each straw represents a fibre (Fig. 4A);
- filling the space between each fibre, from an end, with a binding agent which, after hardening, fixates each fibre in the bundle and allows the bundle to be processed as a single solid (Fig. 4B);
- cleaving and polishing the bundle on one side;
- depositing a thin aluminium layer, for example via sputtering, over the cleaved end of every fibre in the bundle (Fig. 4C, Fig. 4D and detailed view from Fig. 4E to Fig. 4F);
- optionally, surface treatments are applied on the surface of aluminium layer to improve the characteristic of the surface, for example polishing of the aluminium surface can reduce surface defects;
- applying the methods of production of the film can now be applied directly on the aluminium layer on the end of the bundle (Fig. 4G). Other processes may be employed to produce distinct micro and nano structures optical structures on the surface, including but not limited to optical lenses via Photo-Polymerization [5,6,7], Focused Ion Beam Milling [5,6,9], Thermal pulling[6], Chemical Etching [6], High resolution micromachining [6];
- removing the binding agent, for example using a solvent;
- separating the fibres into individual sensing tips (Fig. 4H, Fig. 4I, Fig. 4J, Fig. 4K), without damaging the films fabricated on their cleaved edges, or ends.

In an embodiment, the thin films comprise nanoparticles, chemical and biological markers.

In an embodiment, the height of the emersed fibres increases with a higher number of fibres in the bundle.

In an embodiment, the filling of the space between each fibre is done by fully, or partially, submerse the bundle.

In an embodiment, the fibres have a few dm up to about one metre. Later these are integrated in optical systems by fusion of the surface without the film to other fibres.

The binding agent transitions from liquid to solid by a temperature change or by curing. Preferably, a binder is a binding agent that is non-permanent, such as wax, sealing wax, resins, etc.

In an embodiment, the binding agent in the liquid state is introduced in the spaces between the fibres by capillarity or by applying negative pressure on the bundle.

In an embodiment, the physical and chemical properties of the binding agent must be chosen to serve as a subtract to the film fabrication processes.

In an embodiment, both adhesive and binder or soluble binding agent, are binding agents. An adhesive is the binding agent between a fibre and a film, applied with a bonding method, thus producing a permanent bond. A binder is the binding agent used to hold the fibres in place during the fabrication of the film. After cleaving, the surface obtained is composed of the fibre ends and the binder between them.

In an embodiment, a belt is tight around the bundle to physically help the application of a binding agent.

In an embodiment, a thin film of aluminium is deposited on the fibre, preferably on a cleaved surface of the fibre, and then fabricate the film directly on the fibre.

It is also possible to implement said method on a single fibre individually, however it is very costly, time consuming and not efficient. The direct fabrication on a single fibre can be extended to a fabrication method of the film directly on multiple fibres simultaneously.

In another embodiment, the thin films of metamaterial are pre-made using a standard bottom-up fabrication technique consisting of metallic electrodeposition inside a nanoporous anodic aluminium oxide template serving as a scaffold. The template was produced on a thin sheet of aluminium via a two-step anodization process [3].

In an embodiment, the resulting film is then mounted in the fibre with a multitude of adhesive layers.

In an embodiment, the thin films are fabricated using top-down approaches involve lateral patterning of bulk materials by either subtractive or additive methods to realize nano-sized structures. Several methods are used to fabricate nanostructures using the top-down approach such as photolithography, scanning lithography, laser machining, soft lithography, nanocontact printing, nanosphere lithography, colloidal lithography, scanning probe lithography, ion implantation, diffusion, deposition [3].

The present disclosure comprehends several advantages such as: a greater mechanical and structural strength in the bond; guarantees the stability of the optical alignment over time; reduces the power losses of the light signal, thus increasing the performance of the optical device; a simplified fabrication method, thus leading to become more cost-effective and scalable for mass production.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

References

[1] Leite, I.T., Hierro-Rodriguez, A., Silva, A.O., Teixeira, J.M., Sousa, C.T., Fernández-García, M.P., Araújo, J.P., Jorge, P.A.S. and Guerreiro, A. (2013), Exciting the optical response of nanowire metamaterial films on the tip of optical fibres. Phys. Status Solidi RRL, 7: 664-667. https://doi.org/10.1002/pssr.201308033

[2] https://www.daikinchemicals.com/solutions/products/optical-materials/optodyne-uv-clear-adhesives.html

[3] Kumar, S., Bhushan, P., Bhattacharya, S. (2018). Fabrication of Nanostructures with Bottom-up Approach and Their Utility in Diagnostics, Therapeutics, and Others. In: Bhattacharya, S., Agarwal, A., Chanda, N., Pandey, A., Sen, A. (eds) Environmental, Chemical and Medical Sensors. Energy, Environment, and Sustainability. Springer, Singapore. https://doi.org/10.1007/978-981-10-7751-7_8

[4] Theory of ionospheric waves, K.C.Yeh and C.H. Liu, academic Press New York and London (1972)

[5] Complex Light and Optical Forces IX, edited by Enrique J. Galvez, Jesper Glückstad, David L. Andrews, Proc. of SPIE Vol. 9379, 93790N, 2015 SPIE doi: 10.1117/12.2079798

[6] New trends on Optical Fiber Tweezers; R. S. Rodrigues Ribeiro, O. Soppera, A. Oliva, A. Guerreiro, P. A. S. Jorge, Volume: 33, Issue: 16, Aug.15, 15, pp. 3394 - 3405, Journal of Lightwave Technology (2015) DOI: 10.1109/JLT.2015.2448119

[7] Optical Fiber Tweezers Fabricated by Guided Wave Photo-Polymerization, Rita S. Rodrigues Ribeiro; Raquel Queirós; Olivier Soppera; Ariel Guerreiro and Pedro A. S. Jorge; Photonics 2015, 2, 634-645; doi:10.3390/photonics2020634

[8] Optical fibers as beam shapers: from Gaussian beams to optical vortices; RITA S. RODRIGUES RIBEIRO, PABITRA DAHAL, ARIEL GUERREIRO, PEDRO JORGE, JAIME VIEGAS; Optics letters Vol. 41, No. 10/ May 15 2016 http://dx.doi.org/10.1364/OL.41.002137

[9] Fabrication of Fresnel plates on optical fibres by FIB milling for optical trapping, manip; RITA S. RODRIGUES RIBEIRO, PABITRA DAHAL, ARIEL GUERREIRO, PEDRO JORGE, JAIME VIEGAS; Scientific Reports, 7: 4485 (2017)DOI:10.1038/s41598-017-04490-2

**Claims**

1. Multilayer optical interface comprising:

   a first optical component for receiving a light signal;

a second optical component for propagating the light signal;

a plurality of adhesive layers binding an end of the first optical component to an end of the second optical component, for matching the optical impedance;

wherein the first optical component comprises a refractive index different from a second optical component refractive index,

wherein the plurality of adhesive layers comprises a sequential gradient of refraction indices.

2. Multilayer optical interface according to claim 1 wherein the first optical component is selected from the list: optical fibre, optical waveguide, optical circuit, and integrated optics device.

3. Multilayer optical interface according to any of the previous claims wherein the second optical component is selected from the list: film, foil and membrane, preferably a film, more preferably a thin film.

4. Multilayer optical interface according to the previous claim wherein the film comprises nanoparticles, nanostructures, chemical or biological markers; preferably the nanoparticles are selected from nanotubes, nanowires, nanodots, and quantum dots, and preferably the markers are selected from metamaterials, photonic crystals and nanostructured membranes, and preferably the markers are selected from antibodies and immobilized peptide nucleic acid probes.

5. Multilayer optical interface according to any of the previous claims wherein the number of the adhesive layers is from 2 to 100, preferably 2 to 20, and the adhesive layers are made of acrylic-based, silicone-based, epoxy-based, polyurethane-based liquids, or combination thereof; preferably fluorinated epoxy and fluorinated epoxy acrylate resins.

6. Multilayer optical interface according to any of the previous claims wherein thickness of each adhesive layer of the plurality of adhesive layer is from $1 \times 10^{-4}$ m to $1 \times 10^{-6}$ m.

7. Multilayer optical interface according to any of the previous claims wherein the refraction index of each adhesive layer of the plurality of adhesive layers is within the range of the first optical component refraction index and the second optical component refractive index.

8. Multilayer optical interface according to any of the previous claims further comprising a coating agent surrounding the plurality of adhesive layers; preferably the coating agent is selected from liquid optical adhesive, silvering coatings, dielectric coatings constituting high-reflection optical coatings.

9. Multilayer optical interface according to the previous claim wherein the coating agent has a refraction index at least 20% higher than the plurality of adhesive layers refraction indices.

10. Method of fabrication of a multilayer optical interface according to any of the claims 1-9 comprising the steps of:

applying a pre-determined number of adhesive layers at an end of a first optical component;

placing an end of the second optical component over the adhesive layers;

curating the adhesive layers.

11. Method according to the previous claim further comprising the steps of:

joining a plurality of fibres to form a bundle;

dipping the bundle in a soluble binding agent for binding the plurality of fibres; curating the soluble binding agent;

cleaving the bundle such that the plurality of fibres has a flat surface end;

polishing the flat surface end;

removing the soluble binding agent;

wherein the bundle is fully, or partly, dipped in the soluble binding agent;

wherein the soluble binding agent is in the liquid form;

wherein the soluble bind agent binds each of the fibres from the plurality of fibres by capillarity or negative pressure.

12. Method according to any of the claims 10-11 comprising the steps:

depositing a thin aluminium layer over the flat surface end;

transforming the thin aluminium layer to obtain a nanostructure thin layer;
separating each fibre from the bundle.

13. Method according to any of the claims 11-12 wherein the polishing of the flat surface end is by chemical processes, physical processes or combination thereof.

14. Method according to claim 12 wherein the transformation of the thin aluminium layer is by chemical processes, physical processes or combination thereof.

15. Method according to any of the claims 11-14 wherein the soluble binding agent is removed using a solvent.

**Fig. 1**

**Fig. 2**

301

103

105

107

303

111

A

B

**Fig. 3**

**Fig. 4**

Europäisches
Patentamt

European
Patent Office

Office européen
des brevets

# EUROPEAN SEARCH REPORT

**Application Number**

EP 22 18 2366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/103726 A1 (MORI KENJI [JP] ET AL) 5 June 2003 (2003-06-05) * paragraphs [0037], [0076], [0083], [0091], [0100], [0101]; figures 1,2,8A-8E * | 1-4,6-9 | INV. G02B6/26 ADD. G02B1/111 G02B6/04 |
| X | JP 2004 004349 A (MATSUSHITA ELECTRIC IND CO LTD) 8 January 2004 (2004-01-08) * abstract; figures 5-7 * * paragraph [0057] – paragraph [0065] * | 1-15 | G02B6/10 G02B6/30 G01N21/77 |
| A | US 2005/007675 A1 (MATSUMOTO MITSUAKI [JP] ET AL) 13 January 2005 (2005-01-13) * paragraphs [0073], [0095] – [0105] * | 1-15 | |
| A | GUERREIRO A ET AL: "Functional metamaterials for optical sensing of hydrogen", SPIE PROCEEDINGS; [PROCEEDINGS OF SPIE ISSN 0277-786X], SPIE, US, vol. 11207, 3 October 2019 (2019-10-03), pages 1120724-1120724, XP060126015, DOI: 10.1117/12.2527672 ISBN: 978-1-5106-3673-6 * page 3 – page 5; figure 3 * | 3,4,12,14 | TECHNICAL FIELDS SEARCHED (IPC) G02B G01N |
| A | US 6 424 765 B1 (HARKER ANDREW THOMAS [GB]) 23 July 2002 (2002-07-23) * column 2, line 34 – line 42 * | 8,9 | |
| A | US 5 996 376 A (JOHNSON ERIC G [US] ET AL) 7 December 1999 (1999-12-07) * column 4, line 65 – column 5, line 17 * * column 7, line 50 – line 58 * | 11-15 | |

The present search report has been drawn up for all claims

| Place of search | Date of completion of the search | Examiner |
|---|---|---|
| The Hague | 9 December 2022 | Bourhis, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 2366

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2022

| Patent document cited in search report | | Publication date | Patent family member(s) | | Publication date |
|---|---|---|---|---|---|
| US 2003103726 | A1 | 05-06-2003 | CA | 2408736 A1 | 18-04-2003 |
| | | | DE | 10248778 A1 | 30-04-2003 |
| | | | FR | 2831276 A1 | 25-04-2003 |
| | | | JP | 2003195006 A | 09-07-2003 |
| | | | US | 2003103726 A1 | 05-06-2003 |
| JP 2004004349 | A | 08-01-2004 | NONE | | |
| US 2005007675 | A1 | 13-01-2005 | CN | 1573378 A | 02-02-2005 |
| | | | JP | 4260061 B2 | 30-04-2009 |
| | | | JP | 2005010757 A | 13-01-2005 |
| | | | US | 2005007675 A1 | 13-01-2005 |
| US 6424765 | B1 | 23-07-2002 | DE | 69426707 T2 | 13-06-2001 |
| | | | EP | 0736190 A1 | 09-10-1996 |
| | | | US | 6424765 B1 | 23-07-2002 |
| | | | WO | 9518395 A1 | 06-07-1995 |
| US 5996376 | A | 07-12-1999 | AT | 205308 T | 15-09-2001 |
| | | | AU | 7103798 A | 11-11-1998 |
| | | | CA | 2286246 A1 | 22-10-1998 |
| | | | DE | 69801570 T2 | 27-06-2002 |
| | | | EP | 0974077 A2 | 26-01-2000 |
| | | | JP | 2001520761 A | 30-10-2001 |
| | | | US | 5996376 A | 07-12-1999 |
| | | | WO | 9847045 A2 | 22-10-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEITE, I.T. ; HIERRO-RODRIGUEZ, A. ; SILVA, A.O. ; TEIXEIRA, J.M. ; SOUSA, C.T. ; FERNÁN-DEZ-GARCÍA, M.P. ; ARAÚJO, J.P. ; JORGE, P.A.S. ; GUERREIRO, A.** Exciting the optical response of nanowire metamaterial films on the tip of optical fibres. *Phys. Status Solidi RRL,* 2013, vol. 7, 664-667, https://doi.org/10.1002/pssr.201308033
- Fabrication of Nanostructures with Bottom-up Approach and Their Utility in Diagnostics, Therapeutics, and Others. **KUMAR, S. ; BHUSHAN, P. ; BHATTA-CHARYA, S.** Environmental, Chemical and Medical Sensors. Energy, Environment, and Sustainability. Springer, 2018
- **K.C.YEH ; C.H. LIU.** Theory of ionospheric waves. academic Press, 1972
- Complex Light and Optical Forces IX. Proc. of SPIE. SPIE, 2015, vol. 9379, 93790N

- **R. S. RODRIGUES RIBEIRO ; O. SOPPERA ; A. OLIVA ; A. GUERREIRO ; P. A. S. JORGE.** New trends on Optical Fiber Tweezers. *Journal of Lightwave Technology (2015),* 15 August 2015, vol. 33 (16), 3394-3405
- **RITA S. RODRIGUES RIBEIRO ; RAQUEL QUEIRÓS ; OLIVIER SOPPERA ; ARIEL GUERREIRO ; PEDRO A. S. JORGE.** Optical Fiber Tweezers Fabricated by Guided Wave Photo-Polymerization. *Photonics,* 2015, vol. 2, 634-645
- **RITA S. RODRIGUES RIBEIRO ; PABITRA DAHAL ; ARIEL GUERREIRO ; PEDRO JORGE ; JAIME VIEGAS.** Optical fibers as beam shapers: from Gaussian beams to optical vortices. *Optics letters,* 15 May 2016, vol. 41 (10
- **RITA S. RODRIGUES RIBEIRO ; PABITRA DAHAL ; ARIEL GUERREIRO ; PEDRO JORGE ; JAIME VIEGAS.** Fabrication of Fresnel plates on optical fibres by FIB milling for optical trapping, manip. *Scientific Reports,* 2017, vol. 7, 4485